# EUROPEAN PATENT SPECIFICATION

(11) **EP 3 024 183 B1**
(45) Date of publication and mention of the grant of the patent: **01.01.2020**
(21) Application number: 14772693.9
(22) Date of filing: 05.03.2014
(51) Int. Cl.: H04L 12/70, H04L 29/08, H04L 12/64

(54) **LOAD SHARING SYSTEM, METHOD AND COMPUTER STORAGE MEDIUM**
LASTTEILUNGSSYSTEM, VERFAHREN UND COMPUTERSPEICHERMEDIUM
SYSTÈME DE PARTAGE DE CHARGE, PROCÉDÉ ET SUPPORT DE STOCKAGE INFORMATIQUE

(30) Priority: 15.07.2013 CN 201310295630
(43) Date of publication of application: 25.05.2016
(73) Proprietor: ZTE Corporation, Guangdong Province 518057 (CN)
(72) Inventor: CHEN, Yangping, Shenzhen Guangdong 518057 (CN)
(74) Representative: Ligi, Stefano
(86) International application number: PCT/CN2014/072940
(87) International publication number: WO 2014/154084

(56) References cited:
- CN-A- 1 588 921
- CN-A- 101 159 915
- CN-A- 101 384 015
- US-A1- 2012 203 866
- US-A1- 2013 097 680

## Description

### TECHNICAL FIELD

The disclosure relates to the field of communications, and in particular to a system and method for load sharing, and a computer storage medium.

### BACKGROUND

In a communication system, along with the continuous development of the communication market, the requirement on the capacity of a communication processing system becomes higher and higher. At present, a single-node processing system can no longer meet an ever increasing communication demand, and thus an N+1 multi-node working load sharing system has become the development direction. However, how to handle load sharing and management of a multi-node cache becomes a problem, which needs to be solved.

US2013/097680 A1 relates to a multi-tenant, elastically scalable cache as a service. US2012/203866 A1 relates to a distributed caching hierarchy that includes multiple edge routing servers.

### SUMMARY

In view of this, embodiments of the disclosure are intended to provide a system and method for load sharing, and a computer storage medium according to independent claims 1-3, respectively, which can share a load brought by service processing and data inquiry during service processing.

To this end, the technical solutions of the embodiments of the disclosure are implemented as follows.

A system for load sharing is provided, which includes a distribution device, a plurality of service processors and a plurality of inquiry processors.

The distribution device is configured to determine a target service processor in the service processors, and send a service processing request to the target service processor.

The target service processor is configured to, when receiving the service processing request sent by the distribution device, determine a target inquiry processor in the inquiry processors, send a target data inquiry request to the target inquiry processor, and carry out a service work needed to be applied to target data after acquiring the target data.

The target inquiry processor is configured to receive the data inquiry request from the target service processor, acquire the target data cached in its own memory, and send the target data to the target service processor.

The target service processor is further configured to, when unable to acquire the target data from the target inquiry processor, access a core network, so as to acquire the target data.

The target service processor is further configured to:
when the memory of the target inquiry processor does not store the target data, store the target data from the core network to the memory of the target inquiry processor; and when unable to access the target inquiry processor, store an access failure result to its own memory, wherein the target service processor excludes the inquiry processors which cannot be accessed according to the access failure results recorded in its own memory when selecting the target inquiry processor.

The memory of the target inquiry processor is further configured to:
automatically delete stored data of which the storage time reaches a preset period.

A method for load sharing is further provided, which includes that:
a distribution device, a plurality of service processors and a plurality of inquiry processors are provided; the distribution device determines a target service processor in the service processors; the distribution device sends a service processing request to the target service processor, so that the target service processor may be enabled to determine a target inquiry processor in the inquiry processors, and further send a target data inquiry request to the target inquiry processor, and the target inquiry processor may be enabled to send target data to the target service processor after acquiring the target data cached in its own memory; and after acquiring the target data, the target service processor carries out a service work needed to be applied to the target data. When unable to acquire the target data from the target inquiry processor, the target service processor accesses a core network, so as to acquire the target data, and the target data are sent to the target service processor.

When the memory of the target inquiry processor does not store the target data, the target service processor stores the target data from the core network to the memory of the target inquiry processor.

When unable to access the target inquiry processor, the target service processor stores an access failure result into its own memory; wherein the target service processor excludes the inquiry processors which cannot be accessed according to the access failure results recorded in its own memory when selecting the target inquiry processor.

The memory of the target inquiry processor may automatically delete stored data of which the storage time reaches a preset period.

A computer storage medium is further provided, which stores a computer program configured to carry out the above method for load sharing.

In the system and method for load sharing as well as the computer storage medium according to the embodiments of the disclosure, the distribution device may assign a service processor to take charge of carrying out the service work at first, and then the service processor further assigns an inquiry processor to locally call data relevant to the service work after receiving the assignment of the distribution device; the inquiry processor provides the data to the service processor after acquiring the data, and finally the service processor carries out and completes the service work according to the acquired data. Therefore, under a vast of service requests, the distribution device may systematically assign different service works to different service processors, and the respective service processors may acquire required data information through different inquiry processors so as to carry out their own service works, thereby implementing load sharing among multiple nodes.

### BRIEF DESCRIPTION OF THE DRAWINGS

Fig. 1 is a structural diagram of a system for load sharing according to an embodiment of the disclosure;
Fig. 2 is another structural diagram of a system for load sharing according to an embodiment of the disclosure; and
Fig. 3 is a step diagram of a method for load sharing according to an embodiment of the disclosure.

### DETAILED DESCRIPTION

In order to make the technical problems to be solved, the technical solutions and the advantages of the disclosure clearer, the disclosure is further described below with reference to the drawings and specific embodiments in detail.

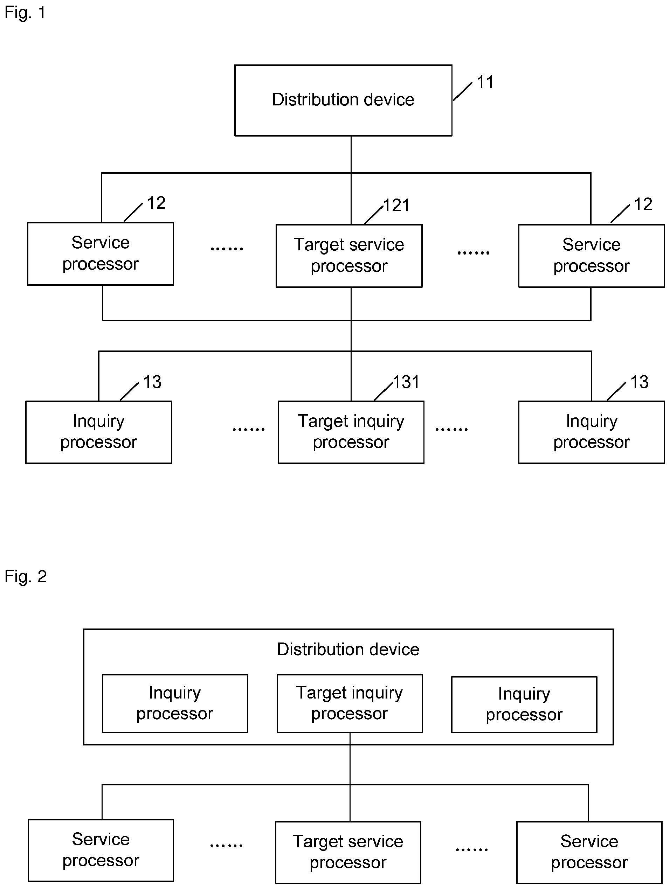

Fig. 1 is a structural diagram of a system for load sharing according to the embodiment of the disclosure. As shown in Fig. 1, the system for load sharing mainly includes a distribution device 11, a plurality of service processors 12 and a plurality of inquiry processors 13.

The distribution device 11 is configured to determine a target service processor 121 in the service processors 12, and send a service processing request to the target service processor 121.

The target service processor 121 is configured to, when receiving the service processing request sent by the distribution device 11, determine a target inquiry processor 131 in the inquiry processors 13 and send a target data inquiry request to the target inquiry processor 131. The target service processor 121 is further configured to carry out a service work needed to be applied to target data after acquiring the target data.

The target inquiry processor 131 is configured to receive the data inquiry request from the target service processor 121, acquire the target data cached in its own memory, and send the target data to the target service processor 121.

The distribution device according to the embodiment may assign a service processor to take charge of carrying out the service work at first, and then the service processor further assigns an inquiry processor to locally call data relevant to the service work after receiving the assignment of the distribution device. The inquiry processor provides the data to the service processor after acquiring the data, and finally the service processor carries out and completes the service work according to the acquired data. Therefore, under a vast of service requests, the distribution device may also systematically assign different service works to different service processors, and the respective service processors may acquire required data information through different inquiry processors so as to carry out their own service works, thereby implementing load sharing among multiple nodes.

In addition, in the embodiment of the disclosure, the distribution device 11 is further configured to:
when the target service processor 121 cannot acquire the target data from the target inquiry processor 131, access a core network, so as to acquire the target data, and send the target data to the target service processor 121.

In order to avoid a work delay due to a fact that the target service processor cannot acquire the target data, the target service processor according to the embodiment calls the target data from the core network.

It should be noted that there are many reasons why the service processor cannot acquire the target data from the target inquiry processor. For example, the memory of the target inquiry processor fails in running because the memory does not store the target data or the stored data have expired. For another example, the target inquiry processor and the target service processor fail in interaction.

Thus, in the embodiment of the disclosure, the target service processor 121 is further configured to:
when the memory of the target inquiry processor 131 does not store the target data, store the target data from the core network to the memory of the target inquiry processor 131; and
when unable to access the target inquiry processor 131, store an access failure result into its own memory; wherein the target service processor 121 excludes the inquiry processors 13 which cannot be accessed according to the access failure result recorded in its own memory when selecting the target inquiry processor 131.

It can be seen that the target service processor according to the embodiment of the disclosure may supplement or update the memory of the target inquiry processor in time, so as to directly call the target data from the target inquiry processor at the next time, and avoid an access to the core network again, thereby relieving a burden of the core network. Meanwhile, for an access failure caused by the target inquiry processor, the target service processor creates a "Blacklist" for the target inquiry processor, stores it into it own memory. Next time, when the target service processor is to select the target inquiry processor, the target service processor excludes inquiry processors according to the "Blacklist."

As the data are updated in real time at the core network side, the data stored in the local memory of the target inquiry processor probably have expired, or the inquiry processors recorded in the "Blacklist" have been restored.

Thus, in the embodiment of the disclosure, the memory of the target inquiry processor 131 is further configured to:
automatically delete stored data of which the storage time reaches a preset period.

In an actual application, the system for load sharing may be applied to the field of communications. The distribution device 11 may be implemented by signalling transfer equipment in a communication network and both the service processors 12 and the inquiry processors 13 may be implemented by servers in the communication network, or implemented by Central Processing Units (CPUs), Digital Signal Processors (DSPs) or Field Programmable Gate Arrays (FPGAs) in the communication devices.

The abovementioned system is described below with respect to a specific application environment in detail.

The system of the embodiment may be specifically applied in the field of communications. The distribution device may be the signalling transfer equipment butted with the core network in the communication network, such as a System Interface Unit (SIU), a Session Initiation Protocol Proxy (SIP Proxy) and the like. When a user initiates a request for processing a service to the distribution device through a terminal, the distribution device determines a target service processor from the service processors for taking charge of carrying out a work corresponding to the service processing request. In a specific process, a message in an Integrated Data-service Platform (IDP) of an intelligent network protocol triggers a call to the target service processor, wherein the distribution device may determine the target service processor from the service processors in a polling manner. For the system, there are probably multiple service processing requests waiting for execution within a same period of time. The distribution device assigns a data processor as the target service processor take charge of a part of the service processing requests. For example, one target service processor is assigned to process 30% of the service processing requests. If there are 100 service processing requests waiting for execution, the distribution device may select 30 service processing requests from the 100 service processing requests, and distribute them to the target service processor. When receiving the service processing requests, the target service processor excludes the inquiry processors which cannot be accessed previously according to a historical record of the access results stored therein, and determines a target inquiry processor from the remaining inquiry processors according to a given mode (as all the service processing requests in the field of communications include their exclusive number segments, the target service processor may respectively determine the target inquiry processor according to the number segment. For example, service data with 0-3 in the last of the number segment is executed by one of the inquiry processors and service data with 4-6 in the last of the number is executed by another inquiry processor. Then, the target service processor initiates a mobile user identification code required for service inquiry processing to the target inquiry processor. After receiving the request, the target inquiry processor accesses its own memory, so as to call the mobile user identification code, and returns a result to the target service processor. For the target inquiry processor which cannot be accessed successfully, the target service processor records the access result of a failure locally. If the target service processor cannot acquire the mobile user identification code from the target inquiry processor, the target service processor accesses the core network, so as to acquire the mobile user identification code recorded in the core network. Finally, the target service processor initiates a service request to the core network after obtaining the mobile user identification code, so as to complete subsequent service fulfilment and processing. It should be noted that the inquiry processors in the embodiment are mainly configured to store relevant data of individual services, and thus the inquiry processors may be Cache processors, and may regularly and automatically delete the stored data. In addition, the inquiry processor may be either a component (as shown in Fig. 2) in the distribution device or an independent device.

To sum up, under an extremely vast of service processing requests in the field of communications, the system according to the embodiment still can execute the service work with ease.

In addition, a system for load sharing is further provided, which includes a target service processor 121 and a target inquiry processor 131.

The target service processor 121 is configured to receive a service processing request, determine the target inquiry processor 131 according to the service processing request, send a target data inquiry request to the target inquiry processor 131, and carry out a service work needed to be applied to target data after acquiring the target data.

The target inquiry processor 131 is configured to receive the data inquiry request from the target service processor 121, acquire the target data cached in its own memory, and send the target data to the target service processor 121.

Preferably, the target service processor 121 is further configured to, when unable to acquire the target data from the target inquiry processor 131, access a core network, so as to acquire the target data.

Preferably, the target service processor 121 is further configured to:
when the memory of the target inquiry processor 131 does not store the target data, store the target data from the core network into the memory of the target inquiry processor; and
when the target inquiry processor 131 cannot be accessed, store an access failure result into its own memory; wherein when selecting the target inquiry processor 131, the target service processor 121 excludes the inquiry processors which cannot be accessed according to the access failure results recorded in its own memory.

Preferably, the memory of the target inquiry processor 131 is further configured to:
automatically delete stored data of which the storage time reaches a preset period.

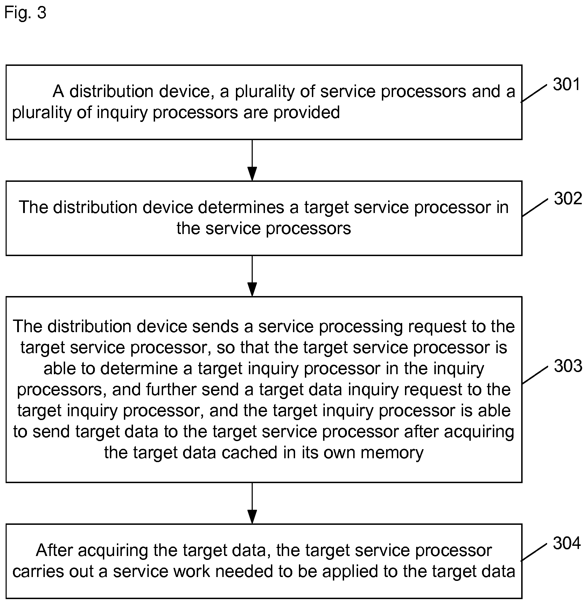

Fig. 3 is a step diagram of a method for load sharing according to an embodiment of the disclosure. As shown in Fig. 3, the method mainly includes the following steps.

Step 301: a distribution device, a plurality of service processors and a plurality of inquiry processors are provided.

Step 302: the distribution device determines a target service processor in the service processors.

Step 303: the distribution device sends a service processing request to the target service processor, so that the target service processor may be enabled to determine a target inquiry processor in the inquiry processors, and further send a target data inquiry request to the target inquiry processor, and the target inquiry processor may be enabled to send target data to the target service processor after acquiring the target data cached in its own memory.

Step 304: after acquiring the target data, the target service processor carries out a service work needed to be applied to the target data.

The method of the embodiment may assign a service processor to take charge of carrying out the service work at first, and then the service processor further assigns an inquiry processor to locally call data relevant to the service work after receiving the assignment of the distribution device. The inquiry processor provides the data to the service processor after acquiring the data, and finally the service processor carries out and completes the service work according to the acquired data. Therefore, under a vast of service requests, the distribution device may also systematically assign different service works to different service processors, and the respective service processors may acquire required data information through different inquiry processors so as to carry out their own service works, thereby implementing load sharing among multiple nodes.

In addition, in the Step 303 of the embodiment, when the target service processor cannot acquire the target data from the target inquiry processor, the target service processor accesses a core network so as to acquire the target data, and sends the target data to the target service processor.

In order to avoid a work delay due to a fact that the target service processor cannot acquire the target data, the target service processor according to the embodiment calls the target data from the core network.

It should be noted that there are many reasons why the service processor cannot acquire the target data from the target inquiry processor. For example, the memory of the target inquiry processor fails in running because the memory does not store the target data or the stored data have expired. For another example, the target inquiry processor and the target service processor fail in interaction. Thus, in the Step 303 of the embodiment, when the memory of the target inquiry processor does not store the target data, the target service processor stores the target data from the core network into the memory of the target inquiry processor; and
when unable to access the target inquiry processor, the target service processor stores an access failure result into its own memory, wherein the target service processor excludes the inquiry processors which cannot be accessed according to the access failure results recorded in its own memory when selecting the target inquiry processor.

It can be seen that the target service processor according to the embodiment of the disclosure may supplement or update the memory of the target inquiry processor in time so as to directly call the target data from the target inquiry processor at the next time, and avoid an access to the core network again, thereby relieving a burden of the core network. Meanwhile, for an access failure caused by the target inquiry processor, the target service processor creates a "Blacklist" for the target inquiry processor, stores it into its own memory. Next time, when the target service processor is to select the target inquiry processor, the target service processor excludes inquiry processors according to the "Blacklist."

As the data are updated in real time at the core network side, the data stored in the local memory of the target inquiry processor probably have expired, or the inquiry processors recorded in the "Blacklist" have been restored. Thus, in the embodiment of the disclosure, the memory of the target inquiry processor may automatically delete stored data of which the storage time reaches a preset period.

Apparently, the above embodiment is a method embodiment corresponding to the system for load sharing of the disclosure. A technical effect which can be achieved by the system for load sharing may be also achieved by the method of the embodiment.

The embodiment of the disclosure further discloses a computer storage medium which stores a computer program configured to execute the method for load sharing, which is shown in Fig. 3 according to the embodiment of the disclosure.

In addition, a method for load sharing is further provided, which mainly includes the following steps.
a: a service processing request is received, and a target inquiry processor is determined according to the service processing request.
b: a target data inquiry request is sent to the target inquiry processor, wherein the target data inquiry request is configured to instruct the target inquiry processor to return target data after the target inquiry processor acquires the target data cached in its own memory.
c: after the target data are required, a service work needed to be applied to the target data is executed.

Preferably, when the target data cannot be acquired from the target inquiry processor, a core network is accessed, so that the target data is acquired from the core network, and the target data are stored.

Preferably, when the memory of the target inquiry processor does not store the target data, the target data from the core network are stored into the memory of the target inquiry processor; and
when the target inquiry processor cannot be accessed, an access failure result is stored into the memory, wherein the inquiry processors which cannot be accessed are excluded according to the access failure results recorded in the memory during selection of the target inquiry processor.

Preferably, the memory of the target inquiry processor may automatically delete stored data of which the storage time reaches a preset period.

The embodiment of the disclosure further discloses a computer storage medium which stores a computer program configured to execute the method for load sharing, which is shown in the steps a - c in the embodiment of the disclosure.

The above is preferred embodiments of the disclosure. It should be appreciated that those skilled in the art can make various modifications and variations to the disclosure without departing from the disclosure. The scope of protection is defined by the appended claims.

### INDUSTRIAL APPLICABILITY

According to the embodiments of the disclosure, the distribution device determines a target service processor from the service processors, and sends a service processing request to the target service processor; the target service processor determines a target inquiry processor from the inquiry processors, and sends a target data inquiry request to the target inquiry processor; the target inquiry processor sends target data to the target service processor after acquiring the target data cached in its own memory; after acquiring the target data, the target service processor carries out a service work needed to be applied to the target data. Therefore, in a service processing process, load due to service processing and data inquiry can be shared.

## Claims

1. A system for load sharing, comprising a distribution device, a plurality of service processors and a plurality of inquiry processors, wherein
the distribution device is configured to determine a target service processor in the service processors, and send a service processing request to the target service processor;
the target service processor is configured to, in the case of receiving the service processing request sent by the distribution device, determine a target inquiry processor in the inquiry processors, send a target data inquiry request to the target inquiry processor, and carry out a service work needed to be applied to target data after acquiring the target data; and
the target inquiry processor is configured to receive the data inquiry request from the target service processor, acquire the target data cached in its own memory, and send the target data to the target service processor,
wherein the target service processor is further configured to access a core network to acquire the target data in the case that the target service processor cannot acquire the target data from the target inquiry processor, and
wherein the target service processor is further configured to:
in the case that the memory of the target inquiry processor does not store the target data, store the target data from the core network into the memory of the target inquiry processor; and
in the case of being unable to access the target inquiry processor, store an access failure result into its own memory, wherein the target service processor excludes an inquiry processor which cannot be accessed according to the access failure result recorded in its own memory at the time of determining the target inquiry processor, and
wherein the memory of the target inquiry processor is further configured to automatically delete stored data with storage time which reaches a preset period.

2. A method for load sharing, comprising:
providing a distribution device, a plurality of service processors and a plurality of inquiry processors;
determining, by the distribution device, a target service processor in the service processors;
sending, by the distribution device, a service processing request to the target service processor, so as to enable the target service processor to determine a target inquiry processor in the inquiry processors and send a target data inquiry request to the target inquiry processor, and to enable the target inquiry processor to send target data to the target service processor after acquiring the target data cached in its own memory; and
after the target service processor acquires the target data, carrying out, by the target service processor, a service work needed to be applied to the target data
in the case that the target service processor cannot acquire the target data from the target inquiry processor, accessing, by the target service processor, a core network, so as to acquire the target data, and sending the target data to the target service processor for storage,
in the case that the memory of the target inquiry processor does not store the target data, storing, by the target service processor, the target data from the core network into the memory of the target inquiry processor; and
in the case that the target service processor cannot access the target inquiry processor, storing an access failure result into its own memory, wherein at the time of determining the target inquiry processor, the target service processor excludes an inquiry processor which cannot be accessed according to the access failure result recorded in its own memory,
wherein the memory of the target inquiry processor automatically deletes stored data with storage time which reaches a preset period.

3. A computer storage medium storing computer-executable instructions configured to execute the method according to claim 2.

## Patentansprüche

1. System zur Lastteilung, umfassend eine Verteilungsvorrichtung, eine Vielzahl von Dienstprozessoren und eine Vielzahl von Abfrageprozessoren, worin
die Verteilungsvorrichtung dafür eingerichtet ist, um einen Zieldienstprozessor unter den Dienstprozessoren zu bestimmen, und eine Dienstbearbeitungsanforderung an den Zieldienstprozessor zu senden;
der Zieldienstprozessor dafür eingerichtet ist, um, für den Fall eines Empfangs der Dienstbearbeitungsanforderung, die von der Verteilungsvorrichtung gesandt wird, einen Zielabfrageprozessor unter den Abfrageprozessoren zu bestimmen, eine Zieldatenabfrageanforderung an den Zielabfrageprozessor zu senden und eine Dienstarbeit durchzuführen, die benötigt wird, um auf Zieldaten nach Erfassung der Zieldaten angewandt zu werden; und
der Zielabfrageprozessor dafür eingerichtet ist, um die Datenabfrageanforderung vom Zieldienstprozessor zu empfangen, die Zieldaten, die in seinem eigenen Speicher zwischengespeichert sind, zu erfassen und die Zieldaten an den Zieldienstprozessor zu senden,
worin der Zieldienstprozessor ferner dafür eingerichtet ist, um auf ein Kernnetz Zugriff zu haben, um die Zieldaten für den Fall zu erfassen, dass der Zieldienstprozessor die Zieldaten vom Zielabfrageprozessor nicht erfassen kann, und
worin der Zieldienstprozessor ferner dafür eingerichtet ist, um:
für den Fall, dass der Speicher des Zielabfrageprozessors die Zieldaten nicht speichert, die Zieldaten vom Kernnetz in den Speicher des Zielabfrageprozessors hinein zu speichern; und
für den Fall, dass er auf den Zielabfrageprozessor keinen Zugriff haben kann, ein Zugriffsausfallergebnis in seinem eigenen Speicher hinein zu speichern, worin der Zieldienstprozessor einen Abfrageprozessor ausschließt, auf den es keinen Zugriff gemäß dem Zugriffsausfallergebnis geben kann, das in seinem eigenen Speicher zum Zeitpunkt des Bestimmens des Zielabfrageprozessors hinterlegt ist, und
worin der Speicher des Zielabfrageprozessors ferner dafür eingerichtet ist, um gespeicherte Daten mit einer Speicherzeit, die einen vorgegebenen Zeitraum erreicht, automatisch zu löschen.

2. Verfahren zur Lastteilung, umfassend:
Bereitstellen einer Verteilungsvorrichtung, einer Vielzahl von Dienstprozessoren und einer Vielzahl von Abfrageprozessoren;
Bestimmen, durch die Verteilungsvorrichtung, eines Zieldienstprozessors unter den Dienstprozessoren;
Senden, durch die Verteilungsvorrichtung, einer Dienstbearbeitungsanforderung an den Zieldienstprozessor, um dem Zieldienstprozessor zu ermöglichen, einen Zielabfrageprozessor unter den Abfrageprozessoren zu bestimmen und eine Zieldatenabfrageanforderung an den Zielabfrageprozessor zu senden, und dem Zielabfrageprozessor zu ermöglichen, Zieldaten an den Zieldienstprozessor nach Erfassung der Zieldaten, die in seinem eigenen Speicher zwischengespeichert sind, zu senden; und
nachdem der Zieldienstprozessor die Zieldaten erfasst hat, Durchführen, durch den Zieldienstprozessor, einer Dienstarbeit, die benötigt wird, um auf Zieldaten angewandt zu werden
für den Fall, dass der Zieldienstprozessor die Zieldaten vom Zielabfrageprozessor nicht erfassen kann, Zugreifen, durch den Zieldienstprozessor, auf ein Kernnetz, um die Zieldaten zu erfassen und Senden der Zieldaten an den Zieldienstprozessor zur Speicherung,
für den Fall, dass der Speicher des Zielabfrageprozessors die Zieldaten nicht speichert, Speichern, durch den Zieldienstprozessor, der Zieldaten vom Kernnetz in den Speicher des Zielabfrageprozessors hinein; und
für den Fall, dass der Zieldienstprozessor auf den Zielabfrageprozessor keinen Zugriff haben kann, Speichern eines Zugriffsausfallergebnisses in seinem eigenen Speicher hinein, worin zum Zeitpunkt des Bestimmens des Zielabfrageprozessors der Zieldienstprozessor einen Abfrageprozessor ausschließt, auf den es keinen Zugriff gemäß dem Zugriffsausfallergebnis geben kann, das in seinem eigenen Speicher hinterlegt ist,
worin der Speicher des Zielabfrageprozessors gespeicherte Daten mit einer Speicherzeit, die einen vorgegebenen Zeitraum erreicht, automatisch löscht.

3. Computerspeichermedium, das computerausführbare Anweisungen speichert, die dafür eingerichtet sind, um das Verfahren nach Anspruch 2 auszuführen.

## Revendications

1. Système de partage de la charge, comprenant un dispositif de distribution, une pluralité de processeurs de service et une pluralité de processeurs d'interrogation, où
le dispositif de distribution est configuré pour déterminer un processeur de service cible dans les processeurs de service et envoyer une requête de traitement de service au processeur de service cible ;
le processeur de service cible est configuré pour, en cas de réception de la requête de traitement de service envoyée par le dispositif de distribution, déterminer un processeur d'interrogation cible dans les processeurs d'interrogation, envoyer une requête d'interrogation des données cibles au processeur d'interrogation cible et effectuer un travail de maintenance qui doit être appliqué aux données cibles après l'acquisition des données cibles ; et
le processeur d'interrogation cible est configuré pour recevoir la requête d'interrogation des données provenant du processeur de service cible, acquérir les données cible mises en cache dans sa propre mémoire et envoyer les données cible au processeur de service cible,
où le processeur de service cible est en outre configuré pour accéder à un réseau central pour acquérir les données cible dans le cas où le processeur de service cible ne puisse pas acquérir les données cible du processeur d'interrogation cible, et
où le processeur de service cible est en outre configuré pour :
dans le cas où la mémoire du processeur d'interrogation cible ne stocke pas les données cibles, stocker les données cibles provenant du réseau central dans la mémoire du processeur d'interrogation cible ; et en cas d'impossibilité d'accéder au processeur d'interrogation cible, stocker un résultat d'échec d'accès dans sa propre mémoire, où le processeur de service cible exclut un processeur d'interrogation auquel il est impossible d'accéder selon le résultat d'échec d'accès enregistré dans sa propre mémoire au moment de déterminer le processeur d'interrogation cible, et
où la mémoire du processeur d'interrogation cible est en outre configurée pour supprimer automatiquement les données stockées avec une durée de stockage qui atteint une période prédéfinie.

2. Méthode de partage de la charge, comprenant les étapes consistant à :
fournir un dispositif de distribution, une pluralité de processeurs de service et une pluralité de processeurs d'interrogation ;
déterminer, par le dispositif de distribution, un processeur de service cible dans les processeurs de service ;
envoyer, à travers le dispositif de distribution, une requête de traitement de service au processeur de service cible, afin de permettre au processeur de service cible de déterminer un processeur d'interrogation cible dans les processeurs d'interrogation et d'envoyer une requête d'interrogation des données cible au processeur d'interrogation cible et permettre au processeur d'interrogation cible d'envoyer des données cible au processeur de service cible après avoir acquis les données cibles mises en cache dans sa propre mémoire ; et
après que le processeur de service cible a acquis les données cible, effectuer, à travers le processeur de service, un travail de maintenance qui doit être appliqué aux données cible
dans le cas où le processeur de service cible ne puisse pas acquérir les données cible provenant du processeur d'interrogation cible, accéder, à travers le processeur de service cible, à un réseau central afin d'acquérir les données cible et envoyer les données cibles au processeur de service cible pour le stockage,
dans le cas où la mémoire du processeur d'interrogation cible ne stocke pas les données cibles, stocker, à travers le processeur de service cible, les données cibles provenant du réseau central dans la mémoire du processeur d'interrogation cible ; et
dans le cas où le processeur de service cible ne puisse pas accéder au processeur d'interrogation cible, stocker un résultat d'échec d'accès dans sa propre mémoire, où, au moment de déterminer le processeur d'interrogation cible, le processeur de service cible exclut un processeur d'interrogation auquel il est impossible d'accéder selon le résultat d'échec d'accès enregistré dans sa propre mémoire,
où la mémoire du processeur d'interrogation cible supprime automatiquement les données stockées avec une durée de stockage qui atteint une période prédéfinie.

3. Support de stockage informatique stockant des instructions exécutables par ordinateur configuré pour exécuter la méthode selon la revendication 2.
